# EUROPÄISCHE PATENTSCHRIFT

(11) **EP 0 638 888 B1**
(45) Veröffentlichungstag und Bekanntmachung des Hinweises auf die Patenterteilung: **19.03.1997**
(21) Anmeldenummer: 94112355.6
(22) Anmeldetag: 08.08.1994
(51) Int. Cl.: G09F 3/03

(54) **Plombe**
Seal
Sceau

(30) Priorität: 09.08.1993 DE 9311898 U
(43) Veröffentlichungstag der Anmeldung: 15.02.1995
(73) Patentinhaber: Paul Hellermann GmbH, 25421 Pinneberg (DE)
(72) Erfinder: Matschiner, Bernd, Dr.-Ing., D-25495 Kummerfeld (DE)
(74) Vertreter: Glawe, Delfs, Moll & Partner

(56) Entgegenhaltungen:
- CH-A- 114 929
- US-A- 2 356 856

## Beschreibung

Die Erfindung betrifft eine Plombe in Form eines Paars von Befestigungselementen, von denen das erste einen Kopf und einen Schaft aufweist und das zweite eine Einrichtung zur Verbindung mit dem Schaft enthält, wobei eines der Elemente mit einer Sollbruchstelle versehen ist.

Die Erfindung erstrebt die Schaffung einer Plombe mit hoher Manipulationssicherheit. Die erfindungsgemäße Lösung besteht darin, daß die Einrichtung zur Verbindung mit dem Schaft von einer in einer Richtung auf den Schaft aufschiebbaren und in der anderen Richtung klemmenden Federklemmscheibe gebildet ist, die von dem zweiten Befestigungselement eingeschlossen ist und von diesem auf ihrer vom Kopf abgewandten Seite abgedeckt ist, während sie auf ihrer dem Kopf zugewandten Seite über eine Sollbruchstelle gehalten ist.

Befestigungselementpaare, deren erstes Element auf einem Stift und einem Kopf und deren zweites Element von einer Federklemmscheibe gebildet ist oder eine solche enthält, sind bekannt (DE-U 19 37 539, DE-U 18 63 051, DE-U 19 14 877, DE-A 17 75 526). Jedoch zeigen sie keinen Weg zur Schaffung einer Plombe, die einen Manipulationsversuch sichtbar werden läßt und selbst nach ggf. erfolgter Manipulation noch eine beträchtliche Verschlußsicherheit besitzt. Diese Vorteile hat die erfindungsgemäße Plombe. Zum einen umschließt sie die Federklemmscheibe nahezu vollständig, so daß kaum Zugang zu Manipulationszwecken denkbar ist. Zum anderen läßt sich nicht erkennen, wo die Schwachstelle liegt, so daß derjenige, der einen Manipulationsversuch durchführt, nicht weiß, gegenüber welchen Kräften die Plombe empfindlich ist. Schließlich bleibt dann, wenn die Sollbruchstelle der Plombe gebrochen ist und daher das zweite Befestigungselement von der Federklemmscheibe abfällt, die Federklemmscheibe selbst noch an dem Stift des ersten Befestigungselements haften, wodurch weiterhin hohe Befestigungssicherheit vorhanden ist, weil selbst eine unmittelbar zugängliche Federklemmscheibe nicht leicht und nicht ohne besondere Werkzeuge entfernt werden kann.

Da das zweite Befestigungselement die Plombenfunktion erfüllt, wird es im folgenden als Plombenelement bezeichnet.

Vorteilhafterweise sind der Stift und das Plombenelement aus Kunststoff gefertigt, da dann zum einen die Kosten gering sind und zum anderen bei Verwendung einer Federklemmscheibe aus härterem Werkstoff wie Metall, insbesondere Federstahl, die unterschiedlichen Materialhärten die Klemmwirkung der Federklemmscheibe am Stift und im Plombenelement unterstützen.

Die Halterung der Federklemmscheibe an der Rückseite des Plombenelements geschieht zweckmäßigerweise durch einen ringförmigen Halteteil, dessen Durchmesser mindestens ebenso groß ist wie der der Federklemmscheibe und der über leicht zerbrechbare Stege oder eine dünne Membran mit dem übrigen Körper des Plombenelements verbunden ist. Der Zerstörungswiderstand der Sollbruchstelle ist geringer als der aller übrigen Komponenten des Befestigungselementpaars. Bei einem Manipulationsversuch wird die Sollbruchstelle zerstört, so daß der die Federklemmscheibe abdeckende, ringförmige Halteteil aus dem Plombenelement herausgelöst wird und dieses von der Federklemmscheibe abfällt, was nicht leicht übersehen werden kann.

Damit das Plombenelement mit der Federklemmscheibe, der Sollbruchstelle und dem Halteteil eine Einheit bildet, ist die Federklemmscheibe vorteilhafterweise in einer im scheibenförmig ausgebildeten Plombenelement enthaltenen Ausnehmung aufgenommen. Darin ist die Federklemmscheibe nahezu vollständig eingeschlossen. Auf der Rückseite ist lediglich eine Öffnung für den Durchtritt des Stiftes vorgesehen.

Zum Einschieben der Federklemmscheibe in die Ausnehmung des Plombenelements erweist es sich als vorteilhaft, auf der Schmalseite des Plombenelements einen Schlitz vorzusehen. Dieser kann beispielsweise bis zur Ausnehmung reichen. Er kann sich jedoch auch bis zur gegenüberliegenden Schmalseite des Plombenelementes erstrecken. Dadurch kann ggf. die Montage des Plombenelements erleichtert werden, indem Werkzeuge von beiden Seiten her in den Körper des Plombenelements zum Positionieren der Federscheibe oder zum Halten des Plombenelements eingreifen. Auch kann die Formung des Körpers des Plombenelements dadurch ggf. erleichtert werden. Es ist nicht erforderlich, daß der Schlitz sich mit konstanter Querschnittsausdehnung über seine ganze Länge erstreckt; vielmehr kann er auf einer Seite, ausgehend von der die Federklemmscheibe enthaltenden Ausnehmung, enger ausgeführt sein. Die Verbindung der die Federklemmscheibe aufnehmenden Ausnehmung mit den Schmalseiten der Plombe über einen Kanal ist nur dann erforderlich, wenn der Körper des Plombenelements einstückig gefertigt wird. Statt dessen ist es auch möglich, ihn aus zwei scheibenförmigen Teilen zu fertigen, die beispielsweise formschlüssig oder durch Verschweißung miteinander verbunden werden.

In vielen Fällen genügt es, die Federklemmscheibe durch Reibung in der Ausnehmung bzw. in dem Schlitz zu halten; denn bis zur Benutzung der Plombe ist nicht mit dem Auftreten von wesentlichen Kräften zu rechnen, die die leichte Federklemmscheibe aus ihrer Montagestellung verschieben könnten. Sobald der Stift in das Plombenelement eingefügt ist, kann sie ohnehin nicht mehr ausweichen. Jedoch kann für die Federklemmscheibe auch ein formschlüssiger Schlitz im Plombenelement vorgesehen werden, wobei die formschlüssig zusammenwirkenden Teile zweckmäßigerweise elastisch nachgeben, wenn die Federklemmscheibe in den Körper des Plombenelements eingeschoben wird. Reibschluß und Formschluß (einschließlich eines Schnappeffekts) können gemeinsam genutzt werden. Beispielsweise kann die Federklemmscheibe und/oder der Körper des Plombenelements mit widerhakenähnlichen Ausformungen versehen sein, die bei der Relativbewegung in Montagerichtung nachgeben und in der entgegengesetzten Richtung eine eindeutige Positionierung für die Federklemmscheibe bilden.

Wenn die Plombe irgendwelche Produkte durch Artikel- oder Kontroll-Nummern, Material- oder Herstellerangaben, Qualitätsangaben oder ähnliches kennzeichnen soll, kann das Befestigungselementpaar an dem Stiftkopf und/oder dem Plombenelement eine Kennzeichnungsfläche aufweisen. Da bei angehefteten Schildern die Gefahr des Verlustes besteht, erweist es sich als sehr hilfreich, beispielsweise nach einer Qualitätskontrolle das geprüfte Gut mit einer entsprechend haltbaren Plombe zu versehen, die als Prüfzeichen am Produkt verbleibt.

Der Stift kann an seinem dem Kopf fernliegenden Ende verjüngt oder angespitzt sein, um eine Einführhilfe zu geben und beim Durchstoßen des Gutes dasselbe nicht einzureißen. Denkbar ist ebenso die Ausgestaltung des Stiftschaftes mit einem über seine gesamte Länge konstanten Durchmesser, wobei das zu durchstoßende Gut eventuell vorgestanzt werden kann, um ein Einreißen zu vermeiden. In dem Stiftabschnitt, der mit der Federklemmscheibe haltend zusammenwirken soll, ist ein konstanter Druckmesser, der auf die Maße der Federklemmscheibe abgestimmt ist, zweckmäßig. Die Länge dieses Abschnitts ist dafür maßgebend, für welche Materialstärken des zu durchstoßenden Gutes die Plombe verwendbar ist, beispielsweise zwischen 1 und 13mm. Das Plombenelement kann entsprechend der Materialdicke des durchstoßenen Gutes auf den Stift aufgeschoben und das aus dem Plombenelement herausragende Endstück abgetrennt werden.

Die Erfindung wird im folgenden näher unter Bezugnahme auf die Zeichnung erläutert, die ein vorteilhaftes Ausführungsbeispiel veranschaulicht. Es zeigen:
- Fig. 1: ein Befestigungselementpaar im Längsschnitt;
- Fig. 2: ein Plombenelement in der Draufsicht;
- Fig. 3: das Befestigungselementpaar im fertig montierten Zustand.

Die Plombe besteht einerseits aus dem Stift 1, der am einen Ende einen runden, tellerförmigen Kopf 2 trägt und am anderen Ende 3 angespitzt ist, die gemeinsam das erste Befestigungselement bilden, und andererseits aus dem zweiten Befestigungslemenent 4. Dieses besteht aus einem Kunststoffkörper 5 und der Federklemmscheibe 6, bei der es sich um ein handelsübliches Schnellbefestigungselement handeln kann, das eine Öffnung 7 aufweist, mit der es auf einen Stift in einer Richtung aufgeschoben werden kann, während es in der anderen Richtung einen hohen Bewegungswiderstand vorfindet. Dieser kann auf Reibung beruhen, die vorzugsweise selbsthemmend ist, und/oder auf formschlüssigem Zusammenwirken mit beispielsweise einer Riefelung der Stiftoberfläche und/oder darauf, daß die die Öffnung 7 begrenzenden Kanten der Klemmscheibe sich in die Oberfläche des weicheren Stifts eingraben. Besonders vorteilhaft ist die Verwendung solcher Federklemmscheiben, bei denen der die Öffnung 7 umgebende Scheibenbereich, der zweckmäßigerweise in Form von radialen Zungen oder Vorsprüngen ausgebildet ist, konisch zur einer Seite hin verformt ist.

Der Stift besteht zweckmäßigerweise aus Kunststoff. Federklemmscheiben der angegebenen Art bestehen in der Regel aus Metall, insbesondere Federstahl. Sie können für den angegebenen Zweck aber auch aus Kunststoff bestehen, der vorzugsweise härter als derjenige des Stifts 1 ist.

Das Befestigungselementpaar wird dadurch zur Plombe, daß es einen Teil aufweist, der einen etwaigen Manipulationsversuch sichtbar macht.

Dieser Teil wird von dem zweiten Befestigungselement 4 gebildet, das deshalb als Plombenelement bezeichnet wird. Es deckt die Federklemmscheibe auf der Außenseite, die dem freien Ende des Stifts 1 zugewendet ist, im wesentlichen ab. Die Vorderseite des Plombenelements weist lediglich eine dem Stift eng angepaßte Bohrung auf, so daß von dieser Seite her die Federklemmscheibe nicht ohne Zerstörung des Plombenelements 4 manipuliert werden kann. Das Plombenelement 4 hält sich in solcher Weise an der Federklemmscheibe, daß es sich von dieser löst, sobald von der Rückseite ein Manipulationsversuch unternommen wird. Zu diesem Zweck ist die Federklemmscheibe 6 in dem Plombenelement 4 mittels eines Halteteils 8 gehalten, der mit dem Plombenelement 4 leicht lösbar, insbesondere über eine Sollbruchstelle, verbunden ist. Im dargestellten Beispiel ist der Halteteil ein Haltering 8. Die Sollbruchstelle wird von dünnen Stegen 9 gebildet, über die der Halteteil 8 einstückig mit dem Plombenelement 4 verbunden ist. Bei einem von hinten am Plombenelement bzw. der Federklemmscheibe angreifenden Manipulationsversuch bricht der Haltering 8 aus dem Plombenelement 4 heraus. Es verbleibt dann in dem Plombenelement 4 eine Öffnung, die größer ist als die Federklemmscheibe 6. Das Plombenelement 4 wird daher nicht mehr an der Federklemmscheibe gehalten, fällt ab und zeigt dadurch den Manipulationsversuch an. Gleichwohl verbleibt die Federklemmscheibe an dem Stift 1, so daß die Befestigungswirkung erhalten bleibt und irgendwelche durch die Plombe bzw. das Befestigungselementpaar miteinander noch verbundenen Teile sich nicht ohne weiteres voneinander lösen.

Die Federklemmscheibe 6 liegt innerhalb des Plombenelements 4 in einer Ausnehmung 10, die auf der Rückseite durch den Haltering 8 und auf der Vorderseite durch eine Wand 11 des Plombenelements begrenzt wird. Wenn der Haltering 8 ein von dem Plombenelement gesondert hergestelltes Teil ist, kann die Ausnehmung ringsum geschlossen ausgebildet sein und wird die Federklemmscheibe eingesetzt, bevor der Haltering mit dem Plombenelement verbunden wird.

Zweckmäßiger kann es sein, den Haltering 8 von vornherein einstückig mit dem Plombenelement 4 auszubilden und einen Querschlitz 12 von der Ausnehmung 10 zum Umfang des Plombenelements zu führen, durch den die Federklemmscheibe in die Ausnehmung eingeschoben werden kann. Es kann genügen, diesen Schlitz nur auf der einen Seite der Ausnehmung 10 vorzusehen. Hingegen können Montage- oder Formungsgründe dafür sprechen, ihn diametral durchzuführen, wie dies in der Zeichnung dargestellt ist.

Es genügen geringe Kräfte, um die Federklemmscheibe in der Ausnehmung bis zur Verwendung gegen Herausfallen zu sichern. Dafür genügt im allgemeinen die Reibung, die man dadurch erzielt, daß der Schlitz 12 und/oder die Ausnehmung 10 mit Untermaß ausgeführt sind. Auch ein Schnappeffekt kann genutzt werden. Nachdem das Plombenelement auf den Stift 1 aufgesetzt ist, kann die Federklemmscheibe nicht mehr ohne Zerstörung des Plombenelements oder des Stifts daraus entfernt werden.

Die erfindungsgemäße Plombe kann verwendet werden, um zwei Teile aneinander zu befestigen, beispielsweise ein Preis-, Qualitäts- oder Herkunftsschild an einem Teppich oder Kleidungsstück. Sie kann auch selbst Informationsträger sein, indem die außen liegenden Flächen 13 des Stiftkopfs 2 oder 14 des Plombenelements als Informationsträgerfläche ausgebildet sind.

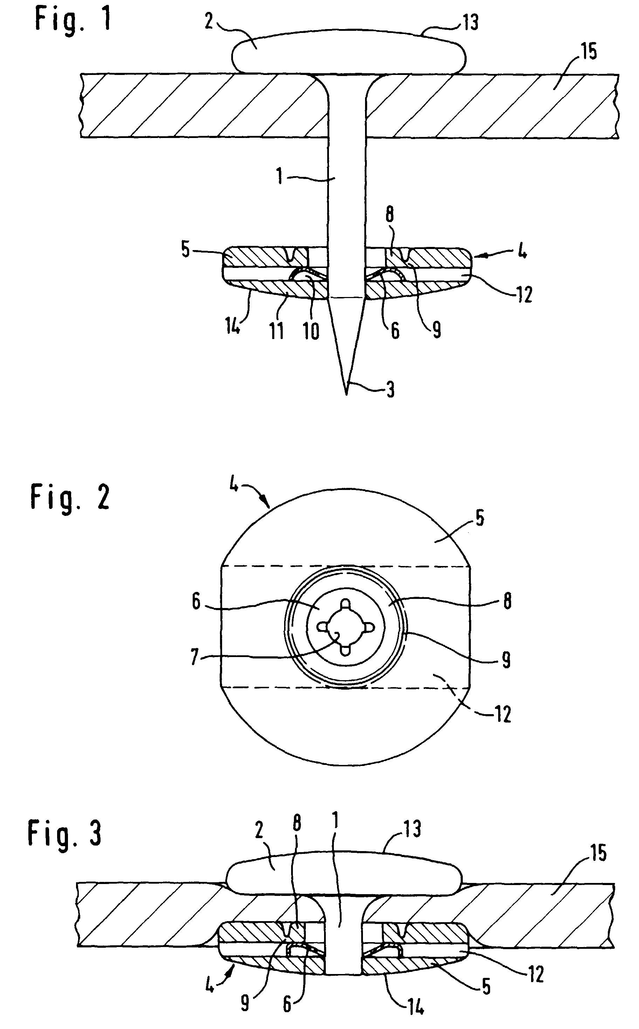

Der Stift 1 hat hinreichende Länge, um an Gegenständen 15 unterschiedlicher Dicke angebracht werden zu können. Nach dem Anbringen kann der überstehende Teil des Stifts abgetrennt werden (Fig. 3).

## Patentansprüche

1. Plombe in Form eines Paars von Befestigungselementen, von denen das erste einen Kopf (2) und einen Schaft (1) aufweist und das zweite (4) eine Einrichtung (6) zum Verbinden mit dem Schaft (1) enthält, wobei eines der Elemente mit einer Sollbruchstelle versehen ist, wobei die Einrichtung zur Verbindung mit dem Schaft (1) von einer in einer Richtung auf den Schaft (1) aufschiebbaren und in der anderen Richtung klemmenden Federklemmscheibe (6) gebildet ist, die von dem zweiten Befestigungselement (4) eingeschlossen ist und von diesem auf ihrer vom Kopf (2) abgewandten Seite abgedeckt und auf ihrer dem Kopf (2) zugewandten Seite über eine Sollbruchstelle (9) gehalten ist.

2. Plombe nach Anspruch 1, dadurch gekennzeichnet, daß der Stift (1) und das Plombenelement (4)aus Kunststoff gefertigt sind.

3. Plombe nach Anspruch 1 oder 2, dadurch gekennzeichnet, daß das scheibenförmig ausgebildete zweite Befestigungselement (4) eine Ausnehmung (10) zur Aufnahme der Federklemmscheibe (6) enthält, die auf ihrer dem Kopf (2) zugewandten Seite von einem eine Öffnung (7) für den Durchtritt des Stiftes (1) bildenden und die Scheibe (6) hintergreifenden, über Sollbruchstellen mit dem übrigen Plombenelement (4) verbundenen Halteteil (8) begrenzt ist.

4. Plombe nach Anspruch 3, dadurch gekennzeichnet, daß die Federklemmscheibe (6) durch einen zur Schmalseite des zweiten Befestigungselements (4) hin offenen Schlitz in die Ausnehmung (10) einschiebbar ist.

5. Plombe nach Anspruch 4, dadurch gekennzeichnet, daß die Federklemmscheibe (6) in der von dem Schlitz gebildeten Ausnehmung (10) durch Reibung gehalten ist.

6. Plombe nach Anspruch 4 oder 5, dadurch gekennzeichnet, daß die Federklemmscheibe (6) durch elastisch formschlüssiges Zusammenwirken mit dem zweiten Befestigungselement (4) in der Ausnehmung (10) gehalten ist.

7. Plombe nach einem der Ansprüche 1 bis 6, dadurch gekennzeichnet, daß an dem Kopf (2) und/oder dem zweiten Befestigungselement (4) eine Kennzeichnungsfläche (13,14) vorgesehen ist.

## Claims

1. A seal in the form of a pair of fastening elements, the first of which has a head (2) and stem (1), and the second (4) of which comprises a means (6) for connection with the stem (1), wherein one of the elements is provided with a predetermined breaking point, wherein the means for connection with the stem (1) is formed by a spring-clip disc (6) which is enclosed by the second fastening element (4) and is covered thereby on its side remote from the head (2) and is retained on its side nearest the head (2) via a predetermined breaking point (9).

2. A seal according to Claim 1, characterised in that the stem (1) and the seal element (4) are made from plastics material.

3. A seal according to Claim 1 or 2, characterised in that the disc-shaped second fastening element (4) includes a recess (10) to accommodate the spring-clip disc (6), which on its side nearest the head (2) is bounded by a retaining member (8) which forms an opening (7) for the passage of the stem (1) and engages behind the disc (6) and which is connected with the rest of the seal element (4) via predetermined breaking points.

4. A seal according to Claim 3, characterised in that the spring-clip disc (6) can be inserted into the recess (10) through a slot which is open towards the narrow side of the second fastening element (4).

5. A seal according to Claim 4, characterised in that the spring-clip disc (6) is held by friction in the recess (10) formed by the slot.

6. A seal according to Claim 4 or 5, characterised in that the spring-clip disc (6) is held in the recess (10) by elastic form-locking co-operation with the second fastening element (4).

7. A seal according to any one of Claims 1 to 6, characterised in that an identification surface (13,14) is provided on the head (2) and/or on the second fastening element (4).

## Revendications

1. Sceau sous la forme d'une paire d'éléments de fixation, parmi lesquels le premier comporte une tête (2) et une tige (1) et le second (4) contient un dispositif (6) pour son raccordement à la tige (1), l'un des éléments étant muni d'un point destiné à la rupture, le dispositif de raccordement à la tige (1) étant constitué par une rondelle de blocage à ressort (6) qui peut glisser sur la tige (1) dans une direction et se bloque dans l'autre direction, rondelle qui est contenue dans le second élément de fixation (4), est recouverte par celui-ci de son côté situé à l'opposé de la tête (2) et est maintenue de son côté dirigé vers la tête (2) au moyen d'un point (9) destiné à la rupture.

2. Sceau selon la revendication 1, caractérisé en ce que la tige (1) et l'élément (4) du sceau sont fabriqués en matière plastique.

3. Sceau selon la revendication 1 ou 2, caractérisé en ce que le second élément de fixation (4), réalisé en forme de disque, comporte un creux (10) pour recevoir la rondelle de blocage à ressort (6), creux qui est limité, de son côté dirigé vers la tête (2), par une partie de maintien (8) qui forme une ouverture (7) pour le passage de la tige (1), retient par-derrière la rondelle (6) et est raccordée au reste de l'élément (4) du sceau par des points destinés à la rupture.

4. Sceau selon la revendication 3, caractérisé en ce que la rondelle de blocage à ressort (6) peut être insérée dans le creux (10) par une fente qui s'ouvre sur le petit côté du second élément de fixation (4).

5. Sceau selon la revendication 4, caractérisé en ce que la rondelle de blocage à ressort (6) est retenue par frottement dans le creux (10) formé par la fente.

6. Sceau selon la revendication 4 ou 5, caractérisé en ce que la rondelle de blocage à ressort (6) est retenue dans le creux (10) en coopérant élastiquement par complémentarité de forme avec le second élément de fixation (4).

7. Sceau selon l'une quelconque des revendications 1 à 6, caractérisé en ce qu'une surface de marquage (13,14) est prévue sur la tête (2) et/ou sur le second élément de fixation (4).
